(19) Europäisches Patentamt
European Patent Office
Office européen des brevets

(11) **EP 4 548 749 A1**

(12) **EUROPEAN PATENT APPLICATION**

(43) Date of publication:
**07.05.2025 Bulletin 2025/19**

(21) Application number: **23206847.8**

(22) Date of filing: **30.10.2023**

(51) International Patent Classification (IPC):
**A01G 9/029** (2018.01)   A01C 1/04 (2006.01)

(52) Cooperative Patent Classification (CPC):
**A01G 9/0291; A01G 9/0293;** A01C 1/04

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Global Biodesign**
**1180 Bruxelles (BE)**

(72) Inventors:
- **Macadar Angier, Victor Alejandro**
**1180 Bruxelles (BE)**
- **Transier, Yannic**
**65232 Taunusstein (DE)**

(74) Representative: **Patentree**
**Edificio Net**
**Rua de Salazares, 842**
**4149-002 Porto (PT)**

<u>Remarks:</u>
Amended claims in accordance with Rule 137(2)
EPC.

(54) **CAPSULE SEED CONTAINER, PLANT CULTIVATION METHOD AND USES**

(57)     The present invention relates to the field of agricultural, horticultural and forestry equipments, particularly to a novel capsule seed container designed for use with an insertion method or mechanism such as a pneumatic gun. The disclosure encompasses a seed container divided into three sections, each serving specific functions for the storage, protection, germination and controlled dispensing of seeds when integrated into a launching mechanism.

Fig. 1

EP 4 548 749 A1

## Description

## TECHNICAL FIELD

The present disclosure relates to a capsule seed container, a plant cultivation method and uses. The now disclosed technology pertains to the field of agricultural, forestry and horticultural equipment, particularly to a novel capsule seed container designed for use with a launching mechanism or manual insertion technique.

## BACKGROUND

The rapid upscaling of afforestation and reforestation activities are required in many areas worldwide, especially in the most biodiverse biomes, such as tropical moist forests and other regions affected by climate-type forest disturbances, such as extreme wildfires, given the ongoing global changes that are partially caused by unsustainable anthropogenic activities, such as fossil fuel consumption and land-use land-cover change [1].

As it is very important to choose the right reforestation approach for specific scenarios, a vast variety of different technologies has evolved. These technologies should be understood as both complementary but also competitive to each other, depending on the specific scenario. With each new problem that arose, new technologies were introduced to provide better reforestation results. Still, current tree planting strategies are not cost-effective over large landscapes, and suffer from constraints associated with time, energy, manpower, and nursery-based seedling production [1].

One of the broadest used solutions is the planting of young tree nurseries either by hand or with a developed machine for such technical effect. Even though this technology can be considered rather effective it is very time and cost-consuming. Especially in hard-to-reach areas, this kind of approach is limited due to its need for manual labour [2]. Therefore, technologies that rely on the usage of an unmanned aerial vehicle - supported seed sowing (UAVsSS), such as drones, became popular. These vehicles promote rapid, cost-effective, fast, and environmentally friendly reforestation by just dropping seed balls in the area of interest.

Recently, studies observed the true success of this kind of UAVsSS by analysing the germination rate of the released seeds. The studies concluded that "[t]he establishment of seedlings was found to be limited by numerous factors, such as humidity, solar exposure, winds, heavy rains and predation, that affected the efficiency of the seed dispersal, germination, and growth." [1]. True germination rates are to be considered to be as low as 4%. That is why most companies promoting their UAVsSS commonly emphasise their efforts on their speed and the number of released seeds rather than the true result of established trees [3].

Given this situation, there is a significant gap between tough and hard-to-reach areas, especially as to be expected in post-wildfire areas. Typically, a burned area is large compared to commercial forest reforestation and the conditions are to be considered disadvantageous for the establishment of new trees. For these reasons, planting young trees or the application of seed balls is not to be considered promising.

Currently, the most advanced reforestation technology can be seen in the field of drone assisted seedling deployment. This technology is currently used for various reforestation projects and is appreciated for its high efficiency of seed dispersion, easier access to hard to reach areas, cost-effective application, especially when compared to manual reforestation, and short preparation time. Nevertheless, there is still room to improve this technical solution, especially in what concerns the protection of seedlings against external environmental factors, such as rain, predators, sunlight, heat, among others. The direct consequence of this multifactor affection is a low germination rate which results in higher system costs because of the need to repeat the reforestation work, and no sensible release pattern possible, especially in hilly areas where the seed balls can roll downhill.

Besides this technology, there is also another approach, where a specific product promises a particularly high effectiveness. The Waterboxx® is such a product that attempts to remedy all the previously mentioned environmental influences, i.e. it is an instrument that supports plants and trees to survive in difficult circumstances without using groundwater or electricity. The Waterboxx® produces and catches water from condensation, and subsequently distributes the collected water over an extended period, to the tree growing in the center of the Waterboxx®. Furthermore, it stimulates the capillary formation of the soil; prevents the evaporation of groundwater; steadies the temperature around the roots; fights competitive weeds near the planted tree; and can even prevent damage by rodents. Still here, there is room for improvement because this solution requires manual application and so it is not a reasonable solution for large and hard to reach areas, high cost of productivity and long cycles of reutilization, where a minimum usage of one year per seedling is needed depending on how much it takes for the tree planted into the Waterboxx® to develop.

Another technology is disclosed in the document WO2018006148 A1 which relates to a disposable capsule and to a plant cultivation method using a capsule that originally served the purpose of preparing a beverage like coffee or tea for growing one or more seeds contained in the capsule, after the use thereof.

These facts are described in order to illustrate the technical problem solved by the achievements of the present document.

## GENERAL DESCRIPTION

The present disclosure relates to a capsule seed container, a plant cultivation method and uses.

The technology now disclosed pertains to the field of agricultural, forestry and horticultural equipment, particularly to a novel capsule seed container designed for use with a launching mechanism, such as a pneumatic gun, or manual insertion technique, such as pressing it directly into the ground. The technology encompasses a capsule seed container divided into three sections, each serving specific functions for the storage, protection, and controlled dispensing of seeds.

This technology aims to address these issues by introducing a capsule seed container designed to work with a manual insertion technique or a launching mechanism i.e. a paintball gun adapted with an automatic feeding system of capsule seed containers. This capsule seed container comprises three sections, each contributing to the effective storage, protection, and a controlled dispensing of seeds when integrated into a launching mechanism, resulting in an efficient planting, since the integration of the capsule seed container with a launching mechanism improves the efficiency and speed of planting seeds. Another advantage is the resulting precise seed dispensing with the design of the third section enabling users to dispense seeds with accuracy, reducing waste and facilitating more efficient planting and a versatile landscape design, i.e. the capsule seed container dimensions and shape can be adapted to different launching mechanisms and different types of seeds.

Due to the many disadvantages in the field of currently used reforestation technologies, which so far only focus on either efficiency or effectiveness, the capsule seed container now disclosed ensures both safe and efficient application in terms of speed, cost and seedling survival rate.

In an embodiment, the capsule seed container is a capsule that is deployed by a launching mechanism attached to an unmanned aerial vehicle, such as a drone, an autonomous tractor or a vehicle, or carried out by a person. The launching mechanism enables the capsule seed container to penetrate the soil to guarantee that each of the capsules results in a tree growing subsequently. Therefore, the capsule seed container now disclosed has a much higher seedling establishment rate than the solutions already known from the prior art.

In another embodiment, the capsule seed container can be carried out by a person and with a manual insertion technique, the person can insert the capsule seed container into the soil.

As previously described, in the prior art there are no effective and efficient solutions existing to comply with the expected conditions of post-wildfire areas or hard-to-access open fields. That is why it has been developed a capsule seed container for air-to-soil release for open fields. The now disclosed capsule seed container is specifically designed to tackle all the above-mentioned challenges and hence provide the most cost-efficient, reliable and fast reforestation.

To accomplish the above mentioned performance, the capsule seed container is divided into three sections, each designed precisely to serve the overall goal of providing the most secure reforestation technology available. The three sections will show different functionalities, which when combined enable the capsule seed container to achieve top efficiency while diminishing the system costs.

The capsule seed container comprises a first, a second and a third sections, for which the functionalities and advantages are going to be explained below for each section.

The first section of the capsule seed container comprises at least one tip and at least one rooting tunnel. In a specific embodiment, the first section can also comprise a blocking material to temporarily block the rooting tunnels to avoid soil and seed loss throughout the rooting tunnels, before the insertion into the soil, such as hydrogel, a material that enables roots to grow through it and degrades in time without negatively affecting the soil composition or the environment. The at least one tip should have an aerodynamic format to enable deeper penetration into the humid lower layers of the soil. In an embodiment, the at least one tip comprises columns with angular shape, by the side of the at least one rooting tunnel, that function as a stake, and helps fixing the capsule seed container in the pre-selected soil location, also called as hotspot. This functionality of functioning as a stake, is highly desired because the installation of these containers seed capsule will be done preferably in the rainy season, and each container seed capsule must stay in the desired hotspot, preventing it from being washed out by the rains, so that the designated tree species grow in the programmed location. Therefore, the capsule seed container enables biodiverse reforestation where it can be ensured that complementary species can be next to each other in a precise location and specially selected according to their needs, for example next to a river, on a slope, etc. Also, this capsule seed container aims to help the reforestation in difficult access areas such as slopes, where seeds can be easily washed away. The at least one rooting tunnel is a side hole in the tip, which makes it possible for the roots, seeds and microbiota to access the humid underlayer of the soil. This at least one rooting tunnel can be open or totally or partially covered by a thin wall from a biodegradable material. In an embodiment, the capsule seed container is entirely made in such biodegradable material. In the embodiment where the rooting tunnels are totally or partially covered, it is used a biopolymer or biodegradable material that degrades fast, i.e. cellulose based materials or PLA with compound additives to accelerate the degradation process, so that the thick walls are opened fast with time and also can break open at the impact of the capsule seed container into the soil. The embodiment where the rooting tunnels are totally or partially covered is used to prevent the falling of the content of the second section, which can be soil, seeds and microbiota, throughout the rooting tunnel holes. In one embodiment, the inner shape of the first section is designed to hold material, preferably hydrogel in the shape of a ball, that works as a blocking cap for the whole seed and soil content, also preventing the falling of the content throughout the rooting tunnel holes in case they are open. In an embodiment, the capsule seed container comprises material that can provide extra humidity to the soil composition, working as a buffer for the dry periods in between the rainy days, such as hydrogel.

The second section of the capsule seed container comprises a container filled with at least one seed. In an embodiment, the container of the second section is filled with a soil preparation, wherein said soil preparation comprises soil, at least one seed, and optional soil enhancer such as microbiota. In an embodiment, the second section further comprises at least one cap holder and its cap. The dimensions of the container have to be designed to work with the launching mechanism or vice versa, for example if an air compression gun is used, then the container must have dimensions to make it fit tight into a barrel, so it does not fall from it when aiming downwards. This container can hold up sufficient volume of seeds and soil preparation to ensure or at least get as close as possible to a 100% success rate of germination of the seed based on the elected predefined probability. For example, when working with seed species that have 50% of sprouting rate and it is desired to achieve a 99% percentile probability of sprouting, then around 7 seeds are positioned into the capsule seed container. The amount of seeds in each container seed capsule depends on the statistical calculations made to achieve the elected percentile probability of sprouting in each hotspot. This is to be considered one of the main aspects of reforestation, as the forest pattern is precisely planned, and a failure of growth could decrease the overall reforestation activity.

In order to calculate the number of seeds needed, the concept of complementary probability is to be used with the following formula:

$$\lceil n \rceil \geq \frac{\log(1-p)}{\log(p_s)} \text{ [Eq. 1]}$$

Where, n is number of seeds for one hotspot/capsule seed container, p is defined probability of at least one seed sprouting, $p_s$ is sprouting rate of the seeds.

For example:

$$\lceil n \rceil \geq \frac{\log(1-0,99)}{\log(0,5)} \frac{\log(0,01)}{\log(0,5)} \approx 6.64$$

The percentile probability of successful sprouting is defined at the reforestation planification and then the formula is applied to achieve that objective number, as well as the second section size is defined to enable enough volume for a correct seedling development. This is to be considered one of the main aspects of reforestation, as the forest pattern is precisely planned, and a failure of growth could decrease the overall reforestation activity.

Depending on the final consistency of that preparation, when the soil preparation is loose, then the second section of the capsule seed container is to be designed to provide a fixation for an upper biodegradable cap to prevent the content from falling from the upper side of the capsule seed container, at the moment of the launch. The cap can have holes to allow the seedling to grow throughout it in the initial stages. The cap can also be made in a biodegradable material to make it easier to break apart when the seedling grows.

The third section of the capsule seed container comprises at least one protuberance. This protuberance, in an aspect/ratio relation shows that it is longer than wide and longer than thick. The at least one protuberance serves firstly as a technical feature to enhance a straight flight while being launched and travelling through the air. Secondly, the at least one protuberance will also promote a series of different safety and protective features, such as sun insulation protection, heat radiation by dissipation, braking arm, predation protection and deterrent holder. The at least one protuberance serves as sun insulation protection as they project a shadow onto the surface of the second section, which is very important since the content of at least one seed or soil preparation in the container of the second section should be maintained as cool and humid as possible for the safe development of microbiota and optimize tree growth. The at least one protuberance serves also as radiator, irradiating the heat received by the sun and by the second and third sections which are buried and in direct contact with the heated dark soil. In an embodiment, the protuberance has its length at least more than twice of the thickness and more than twice of the width. The thin and beneficial ratio of height to width and height to thickness (above 2:1) makes it possible for the protuberance to disperse/dissipate that received energy, by radiation. As an example, in the capsule seed container of the figures, it has been used four protuberances with an average ratio of height to width of 12:1 and an average of height to thickness of 6:1. In the embodiments disclosed in the figures, the tip of the protuberance is rounded to not hurt animals but it can have any particular shape as long as it is more tall than thick and width, and it serves to its purposes. The at least one protuberance serves also as a braking arm, since it will prevent soil, of the surroundings where the capsule seed container is inserted, from getting into the container from the second section and cover the seeds with more soil layers which would affect the correct growth of the seedling. This is useful to ensure the correct sprouting of the seeds by keeping them at the desired/ideal burial depth. The depth of the seed into the soil which goes into the container can be adjusted according to the preferences and needs of each tree species. The braking arm functionality is especially important when the capsule seed container is inserted into slopes where landslides and rainwash occurs frequently. The at least one protuberance serves also as protection, since it will prevent predation from larger animals, such as birds, by functioning as a spike, making it more difficult for predators to access the main container of the second section with the seeds, keeping them sheltered. And in some embodiments, the at least one protuberance serves also as deterrent in the sense that the at least one protuberance can be embedded in deterrent substances, such as pepper solutions, which will ward off bigger animals, such as squirrels, mice, or wild pigs. This can be considered as an additional principle of protection to the physical barrier described before. In the embodiments disclosed in the figures, the rounded shape/profile of the tip of the protuberances were selected as an example of application where it is shown that it is not necessary to harm or cut - by using sharp edges protuberance profiles - the mouths, legs or any other part of the body of the animals that intended to predate the content of the container seed capsule, as its long design and the capability of holding deterrent is sufficient to generate both a physical and a chemical/sensory barrier. The at least one protuberance also serves to provide the whole capsule seed container volume to have the mass centre as close to the tip as possible, and an aerodynamic shape, enabling a straight flight trajectory from air to soil, into the desired hotspot.

For these reasons, it is fair to state that the capsule seed container provides an innovative solution to the market of reforestation solutions. Its clever design and technical features aims to combine and erase all the current issues when trying to reforest burned and non burned areas with a fast, economic and reliable way. It has a combination of solutions to ensure healthy seedling development, and also ensures it will be protected until the plant grows big enough to withstand by itself.

This patent application was funded by the H2020 Innovation Action project Treeads (Grant Agreement number: 101036926).

Along this description, it is considered that the soil or the biodegradable material from which the capsule seed container is made of, contains all the necessary micronutrients, microbiota and organic matter for the seedling in the initial stages of growth before it reaches the soil through the rooting tunnel holes of the capsule seed container. Along this description, it is considered that "soil preparation" is defined as a mix of at least one seed, soil, and optional soil enhancers.

The now disclosed capsule seed container comprises a first section for soil fixation, a second section for seed storage and a third section for heat dissipation, protect the seed from animals and improve the installation either by launching mechanism or manual insertion technique, by enabling to manipulate the container seed capsule grabbing it from this section, wherein the first section comprises at least one tip and at least one rooting tunnel alongside said section; wherein the second section comprises a container filled with at least one seed; wherein the third section comprises at least one protuberance; wherein the container is connected to the rooting tunnel and to the at least one protuberance; wherein the second section is configured to allow the seed germination; and wherein the at least one protuberance is configured to protect the seed germination and the initial seedling development and dissipate heat.

In an embodiment, the at least one tip of the capsule seed container comprises a material to temporarily block the rooting tunnels to avoid soil and seed loss throughout the rooting tunnels before the insertion into the soil.

In an embodiment, the at least one protuberance of the capsule seed container comprises a length at least of more than twice of the thickness and of the width.

In an embodiment, the at least one rooting tunnel of the capsule seed container is open.

In an embodiment, the at least one rooting tunnel of the capsule seed container is covered totally or partially by a biodegradable material thin wall.

In an embodiment, the at least one tip of the capsule seed container comprises a column by the side of the at least one rooting tunnel, with an angular shape.

In an embodiment, the second section comprises a cap holder to withhold a cap at the top of the second section, and a cap, which is used when the seed or soil preparation consistency is loose and it is needed to retain the seed or soil preparation inside the second section, until the insertion into the ground is completed. The cap can have holes to allow the seedling to grow throughout it in the initial stages. The cap can also be made in a biodegradable material to make it easier to break apart when the seedling grows.

In an embodiment, the capsule seed container is made out of biodegradable material, preferably a biodegradable material selected from a list consisting of biodegradable materials suitable to use in agriculture and forestry, preferably certified to be degradable on soil in accordance with the ISO 17556:2019 (Plastics) and ASTM D5988:2018 (Standard Test Method for Determining Aerobic Biodegradation of Plastic Materials in Soil) standards.

In an embodiment, the at least one protuberance of the capsule seed container is embedded in a deterrent substance.

In an embodiment, the capsule seed container further comprises a desiccant or moisture control material or system within the container to maintain seed freshness and viability, working as a buffer in between the dry and humid periods, such as hydrogel.

In an embodiment, the capsule seed container comprises an identification system for labelling the contents of the container.

In an embodiment, the third section of the capsule seed container includes aerodynamic features and stabilizers to enhance trajectory control during flight.

The present description also relates with the use of the capsule seed container in agriculture, afforestation and reforestation activities.

The present description also relates to a plant cultivation method using the capsule seed container described, comprising the following steps: introduction of the seed or the soil preparation in the container of the second section; launch the capsule seed container in direction to the ground, preferably with a launching mechanism or manual insertion technique; the capsule seed container impacts into the soil and holds his position in the ground; the seed or soil preparation in the second section of the capsule seed container germinate the plant.

In an embodiment, the soil preparation used in the plant cultivation method comprises at least one organic or inorganic auxiliary germ-forming ingredient.

In an embodiment, the soil preparation used in the plant cultivation method comprises at least one of the following products: soil, fertilizer, pH corrector, vitamin, fruit and vegetable remains, microbiota, gelling agents, soil enhancers, or their combination.

## BRIEF DESCRIPTION OF THE DRAWINGS

The following figures provide preferred embodiments for illustrating the disclosure and should not be seen as limiting the scope of invention.

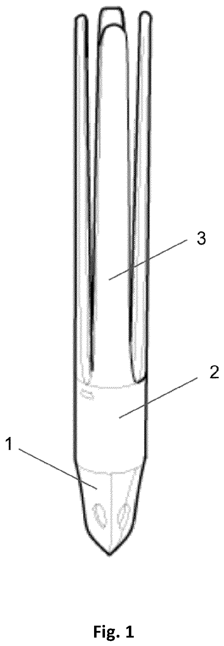

    **Figure 1:** Schematic representation of the embodiment of the capsule seed container in a perspective view.

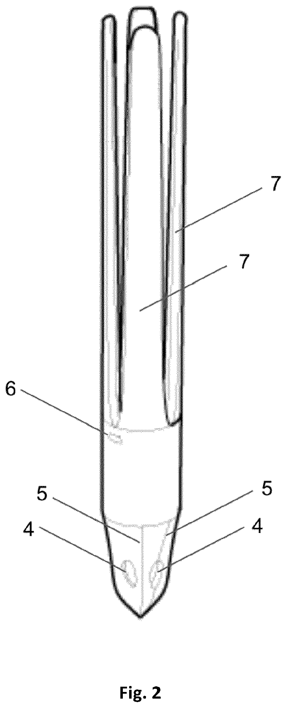

    **Figure 2:** Schematic representation of the embodiment of the capsule seed container in a perspective view.

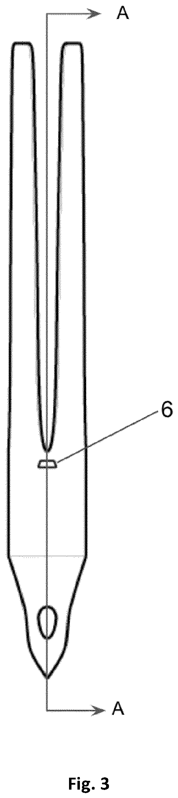

    **Figure 3:** Schematic representation of the embodiment of the capsule seed container in a side view.

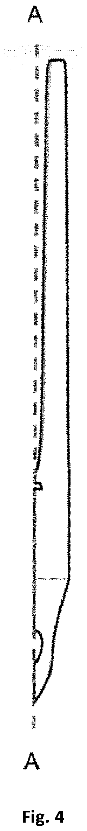

    **Figure 4:** Schematic representation of a cut A-A' in the embodiment of the capsule seed container in a side view.

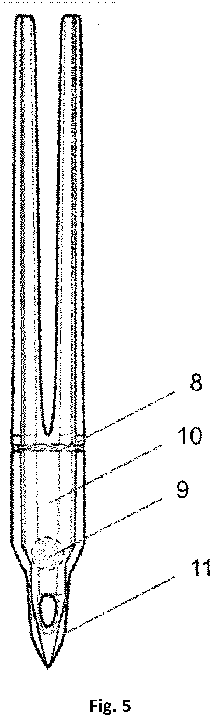

    **Figure 5:** Schematic representation of a cut A-A' in the embodiment of a cut A-A of the capsule seed container in a front view.

Throughout the figures indicated above, the following elements are indicated with the respective references:

    1 - first section;
    2 - second section;
    3 - third section;
    4 - rooting tunnel;
    5 - edges of the angular shaped columns.
    6 - cap holder;
    7 - protuberance;
    8 - cap;
    9 - hydrogel material;
    10 - container space;
    11 - tip.

## DETAILED DESCRIPTION

The present disclosure relates to a capsule seed container, a plant cultivation method and uses.

The disclosed capsule seed container for a seed launching mechanism or direct capsule seed container insertion into the soil by other means such as hand insertion, comprising a first section for soil penetration and fixation, a second section for seed storage and a third section for heat dissipation, protect the seed from animals and improve the installation either by launching mechanism or manual insertion technique by enabling to manipulate the container seed capsule grabbing it from this section, wherein the first section comprises at least one tip and at least one rooting tunnel alongside said section; wherein the second section comprises a container filled with at least one seed, optionally filled with a soil preparation defined in this document as a soil preparation comprising soil, a seed or a plurality of seeds and optionally a soil enhancer; wherein the second section optionally comprises a cap holder and its cap; wherein the third section comprises at least one protuberance; wherein the container is connected to the rooting tunnel and to the at least one protuberance; wherein the second section is configured to allow the seed germination and the at least one protuberance is configured to protect and dissipate heat and protect the seed germination and the initial seedling development.

The at least one protuberance help on the control of sun insolation , since the protuberance cast shadow over the seed or soil preparation with seed or seeds contained in the second section, avoiding too much heat and seed and soil degradation.

In an embodiment, the at least one tip of the first section of the capsule seed container comprises a blocking material, for blocking the seed and soil preparation from falling through the rooting tunnels holes and avoiding the seed and soil loss during the launching. In an embodiment, the at least one tip of the first section of the capsule seed container comprises angular shaped columns at the side of the rooting tunnel that connects the first section to the second section and enables them to work as a non-rotational stake in order to have a better fixation into the ground.

In an embodiment, the at least one protuberance of the capsule seed container comprises a length of at least more than twice of the thickness and of the width, for more stability on the flight and more heat dissipation from the ground.

In an embodiment, the at least one rooting tunnel of the capsule seed container is open, for better results.

In an embodiment, the at least one rooting tunnel of the capsule seed container is covered totally or partially by a biodegradable material thin wall, for better contention of the seed or soil preparation inside the container seed capsule before the insertion.

In an embodiment, the capsule seed container is made out of biodegradable material.

In an embodiment, the at least one protuberance of the capsule seed container is embedded in a deterrent substance to ward off bigger animals.

In an embodiment, the at least one protuberance of the capsule seed container has a ratio of length to width and length to thickness above 2:1 to enable the protuberance to work as a spike and physical barrier fo animal predation.

In an embodiment, the second section comprises a cap holder to withhold a cap at the top of section two, and its cap, which is used when the seed or soil preparation is loose and it is needed to retain the seed or soil preparation inside section 2, until the insertion into the ground is completed. The cap can have holes to allow the seedling to grow throughout it in the initial stages. The cap can also be made in a biodegradable material to make it easier to break apart when the seedling grows.

In an embodiment, the capsule seed container further comprises a desiccant or moisture control material or system within the container to maintain seed freshness and viability, working as a buffer in between the dry and humid periods, such as hydrogel.

In an embodiment, the capsule seed container comprises an identification system for labelling the contents of the container, in order to guarantee an easy way of identifying the content of the container.

In an embodiment, the third section of the capsule seed container includes protuberances with aerodynamic features and stabilizers to enhance trajectory control during flight.

In an embodiment, the dimensions of the first, second, and third sections of the capsule seed container are specifically designed to work with a launching mechanism, preferably a pneumatic gun.

The disclosed capsule seed container is specially used in agriculture, afforestation and reforestation activities.

In what concerns the plant cultivation method using the capsule seed container, said method comprises the following steps: introduction of the seed or the soil preparation in the container of the second section; launch the capsule seed container in direction to the ground, preferably with a launching mechanism or manual insertion technique; the capsule seed container impacts into the soil and holds his position in the ground; the seed or soil preparation in the second section of the capsule seed container germinate the plant.

In an embodiment, the soil preparation used in the method comprises at least one organic or inorganic auxiliary germ-forming ingredient, for better results.

In an embodiment, the soil preparation used in the method comprises one of the following products: soil, fertilizer, pH corrector, vitamin, fruit and vegetable remains, microbiota, gelling agents, soil enhancers, or their combination.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof.

The above-described embodiments are combinable.

The following claims further set out particular embodiments of the disclosure.

**References**

[1] Mohan, et al., M. (2021). UAV-Supported Forest Regeneration: Current Trends, Challenges and Implications. Basel: MDPI. https://www.mdpi.com/2072-4292/13/13/2596
[2] Stelzer, H. (2019). How to plant forest tree seedlings. University of Missouri. https://extension.missouri.edu/publications/g5008
[3] Aghani, M., & Manteuffel-Ross, T. (2020). Enhancing Direct Seeding Efforts with Unmanned Aerial Vehicle (Uav) "Swarms" and Seed Technology. Tree Planters'Notes. https://rngr.net/publications/tpn/63-2/enhancing-direct-seeding-efforts-with-unmanned-aerial-vehicle-uav-201cswarms201d-and-seed-technology

**Claims**

1. A capsule seed container comprising a first section for soil fixation, a second section for seed storage and a third section for heat dissipation, protect the seed from animals and improve the launching or insertion installation,

   wherein the first section comprises at least one tip and at least one rooting tunnel alongside said section;
   wherein the second section comprises a container filled with at least one seed or a soil preparation;
   wherein the third section comprises at least one protuberance;
   wherein the container is connected to the rooting tunnel and to the at least one protuberance;
   wherein the second section is configured to allow the seed germination; and wherein the at least one protuberance is configured to protect the seed germination and the initial seedling development and dissipate heat.

2. The capsule seed container according to the previous claim, wherein the at least one tip comprises a material to temporarily block the rooting tunnels to avoid soil and seed loss throughout the rooting tunnels before the insertion into the soil, preferably a hydrogel material.

3. The capsule seed container according to any of the previous claims, wherein the at least one protuberance comprises a length at least of more than twice of the thickness and of the width.

4. The capsule seed container according to any of the previous claims, wherein the at least one rooting tunnel is open.

5. The capsule seed container according to any of the previous claims, wherein the at least one rooting tunnel is covered totally or partially by a biodegradable material thin wall.

6. The capsule seed container according to any of the previous claims, wherein the at least one tip comprises a column by the side of the at least one rooting tunnel, with an angular shape.

7. The capsule seed container according to any of the previous claims, wherein the top of the second section comprises at least one cap holder and its cap.

8. The capsule seed container according to any of the previous claims, wherein said capsule seed container is made out of biodegradable material.

9. The capsule seed container according to any of the previous claims, wherein the at least one protuberance is embedded in a deterrent substance.

10. The capsule seed container according to any of the previous claims, further comprising a desiccant or moisture control material or system within the container to maintain seed freshness and viability.

11. The capsule seed container according to any of the previous claims, comprising an identification system for labelling the contents of the container.

12. The capsule seed container according to any of the previous claims, wherein the third section includes aerodynamic features and stabilizers to enhance trajectory control during flight.

13. Use of the capsule seed container described in any of the previous claims in agriculture, afforestation and reforestation activities.

14. A plant cultivation method using the capsule seed container described in any of the claims 1 to 12, comprising the following steps:

introduction of the seed or the soil preparation in the container of the second section;
launch the capsule seed container in direction to the ground, preferably with a launching mechanism or manual insertion technique;
the capsule seed container impacts into the soil and holds his position in the ground;
the seed or soil preparation in the second section of the capsule seed container germinate the plant.

15. The method according to the previous claim, wherein the soil preparation comprises at least one organic or inorganic auxiliary germ-forming ingredient.

16. The method according to any of the previous claims 14 to 15, wherein the soil preparation comprises at least one of the following products: soil, fertilizer, pH corrector, vitamin, fruit and vegetable remains, microbiota, gelling agents, soil enhancers, or their combination.

**Amended claims in accordance with Rule 137(2) EPC.**

1. A capsule seed container comprising a first section for soil fixation, a second section for seed storage and a third section for heat dissipation, protect the seed from animals and improve the launching or insertion installation,

wherein the first section comprises at least one tip and at least one rooting tunnel alongside said section;
wherein the second section comprises a container filled with at least one seed or a soil preparation;
wherein the third section comprises at least one protuberance;
wherein the container is connected to the rooting tunnel and to the at least one protuberance;
wherein the second section is configured to allow the seed germination; and wherein the at least one protuberance comprises a length at least of more than twice of the thickness and of the width;
wherein the at least one rooting tunnel is covered totally or partially by a biodegradable material thin wall.

2. The capsule seed container according to the previous claim, wherein the at least one tip comprises a material to temporarily block the rooting tunnels to avoid soil and seed loss throughout the rooting tunnels before the insertion into the soil, preferably a hydrogel material.

3. The capsule seed container according to any of the previous claims, wherein the at least one tip comprises a column by the side of the at least one rooting tunnel, with an angular shape.

4. The capsule seed container according to any of the previous claims, wherein the top of the second section comprises at least one cap holder and its cap.

5. The capsule seed container according to any of the previous claims, wherein said capsule seed container is made out of biodegradable material.

6. The capsule seed container according to any of the previous claims, wherein the at least one protuberance is embedded in a deterrent substance.

7. The capsule seed container according to any of the previous claims, further comprising a desiccant or moisture control material or system within the container to maintain seed freshness and viability.

8. The capsule seed container according to any of the previous claims, comprising an identification system for labelling the contents of the container.

9. The capsule seed container according to any of the previous claims, wherein the third section includes aerodynamic features and stabilizers to enhance trajectory control during flight.

10. Use of the capsule seed container described in any of the previous claims in agriculture, afforestation and reforestation activities.

11. A plant cultivation method using the capsule seed container described in any of the claims 1 to 9, comprising the following steps:

> introduction of the seed or the soil preparation in the container of the second section;
> launch the capsule seed container in direction to the ground, preferably with a launching mechanism or manual insertion technique;
> the capsule seed container impacts into the soil and holds his position in the ground;
> the seed or soil preparation in the second section of the capsule seed container germinate the plant.

12. The method according to the previous claim, wherein the soil preparation comprises at least one organic or inorganic auxiliary germ-forming ingredient.

13. The method according to any of the previous claims 11 to 12, wherein the soil preparation comprises at least one of the following products: soil, fertilizer, pH corrector, vitamin, fruit and vegetable remains, microbiota, gelling agents, soil enhancers, or their combination.

**Fig. 1**

**Fig. 2**

**Fig. 3**

A

A

**Fig. 4**

**Fig. 5**

Europäisches
Patentamt

European
Patent Office

Office européen
des brevets

# EUROPEAN SEARCH REPORT

**Application Number**

**EP 23 20 6847**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/029032 A1 (LAND LIFE COMPANY B V [NL]) 10 February 2022 (2022-02-10) | 1-4, 6-11, 13-16 | INV. A01G9/029 |
| Y | * claims 1,3-7; figures 1-5c,9a-10 * | 12 | ADD. |
| A | * page 3, line 17 - page 6, line 14 * * page 10, lines 13-17 * * page 10, line 30 - page 11, line 17 * * page 12, lines 1-23 * * page 16, lines 29-31 * * page 21, line 29 - page 22, line 18 * | 5 | A01C1/04 |
| X | WO 2023/099439 A1 (LAND LIFE COMPANY B V [NL]) 8 June 2023 (2023-06-08) | 1-4, 6-11, 13-16 | |
| Y | * figures 1-9,12,13 * | 12 | |
| A | * page 6, lines 4-13 * * page 9, line 8 - page 12, line 2 * * page 13, line 5 - page 16, line 3 * * page 20, lines 22-24 * * page 21, line 31 - page 23, line 8 * * page 23, line 27 - page 24, line 6 * | 5 | |
| X | US 2016/234997 A1 (CAMACHO CHRYSTOFF [US]) 18 August 2016 (2016-08-18) | 1-4,7,8, 10,12-16 | TECHNICAL FIELDS SEARCHED (IPC) A01G A01C |
| Y | * claims 1,5-12; figures 4-6 * | 7,11 | |
| A | * paragraphs [0021], [0059] - [0061], [0065] - [0067], [0069], [0070] * | 5 | |
| X | US 3 755 962 A (WALTERS J ET AL) 4 September 1973 (1973-09-04) | 1-4,7, 10,12-16 | |
| Y | * claim 1; figures 1-3 * | 7,11 | |
| A | * column 1, lines 24-40 * * column 1, line 61 - column 2, line 41 * | 5 | |
| Y | EP 3 494 767 A1 (BIOCARBON ENG LTD [GB]; FLETCHER LAUREN E [US] ET AL.) 12 June 2019 (2019-06-12) | 7,11,12 | |
| A | * figures 2,10a-13,17a-d,20a-23b * | 1 | |

-/--

The present search report has been drawn up for all claims

| Place of search | Date of completion of the search | Examiner |
|---|---|---|
| The Hague | 17 April 2024 | Reininghaus, F |

EPO FORM 1503 03.82 (P04C01)

**page 1 of 2**

Europäisches
Patentamt

European
Patent Office

Office européen
des brevets

## EUROPEAN SEARCH REPORT

Application Number

EP 23 20 6847

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GB 1 503 219 A (ILLINOIS TOOL WORKS [US]) 8 March 1978 (1978-03-08) * the whole document * ----- | 1-16 | |

TECHNICAL FIELDS SEARCHED (IPC)

The present search report has been drawn up for all claims

| Place of search | Date of completion of the search | Examiner |
|---|---|---|
| The Hague | 17 April 2024 | Reininghaus, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

**EP 23 20 6847**

This annex lists the patent family members relating to the patent documents cited in the above-mentioned European search report.
The members are as contained in the European Patent Office EDP file on
The European Patent Office is in no way liable for these particulars which are merely given for the purpose of information.

**17-04-2024**

| Patent document cited in search report | | Publication date | Patent family member(s) | | Publication date |
|---|---|---|---|---|---|
| WO 2022029032 | A1 | 10-02-2022 | EP | 4192228 A1 | 14-06-2023 |
| | | | NL | 2026212 B1 | 08-04-2022 |
| | | | WO | 2022029032 A1 | 10-02-2022 |
| WO 2023099439 | A1 | 08-06-2023 | NONE | | |
| US 2016234997 | A1 | 18-08-2016 | NONE | | |
| US 3755962 | A | 04-09-1973 | CA | 908507 A | 29-08-1972 |
| | | | US | 3755962 A | 04-09-1973 |
| EP 3494767 | A1 | 12-06-2019 | AU | 2015320681 A1 | 18-05-2017 |
| | | | AU | 2018226484 A1 | 27-09-2018 |
| | | | CA | 2962076 A1 | 31-03-2016 |
| | | | CA | 3008101 A1 | 31-03-2016 |
| | | | CL | 2017000680 A1 | 15-06-2018 |
| | | | CL | 2019003301 A1 | 14-08-2020 |
| | | | CN | 107249296 A | 13-10-2017 |
| | | | CO | 2017003923 A2 | 31-08-2017 |
| | | | EA | 201790694 A1 | 29-09-2017 |
| | | | EP | 3197258 A1 | 02-08-2017 |
| | | | EP | 3494767 A1 | 12-06-2019 |
| | | | ES | 2887033 T3 | 21-12-2021 |
| | | | JP | 6768746 B2 | 14-10-2020 |
| | | | JP | 2017530706 A | 19-10-2017 |
| | | | JP | 2019004882 A | 17-01-2019 |
| | | | NZ | 731232 A | 26-10-2018 |
| | | | NZ | 742796 A | 25-06-2021 |
| | | | PE | 20171457 A1 | 11-10-2017 |
| | | | US | 2019116719 A1 | 25-04-2019 |
| | | | US | 2022304218 A1 | 29-09-2022 |
| | | | WO | 2016049217 A1 | 31-03-2016 |
| GB 1503219 | A | 08-03-1978 | AR | 206449 A1 | 23-07-1976 |
| | | | AU | 507795 B2 | 28-02-1980 |
| | | | BE | 837252 A | 30-06-1976 |
| | | | BR | 7508700 A | 24-08-1976 |
| | | | CA | 1026559 A | 21-02-1978 |
| | | | CH | 604472 A5 | 15-09-1978 |
| | | | CY | 961 A | 22-12-1978 |
| | | | DD | 121870 A5 | 05-09-1976 |
| | | | DE | 2557573 A1 | 08-07-1976 |
| | | | DK | 676 A | 03-07-1976 |
| | | | EG | 12079 A | 31-12-1978 |
| | | | ES | 232094 U | 01-01-1978 |
| | | | FI | 753712 A | 03-07-1976 |

EPO FORM P0459

For more details about this annex : see Official Journal of the European Patent Office, No. 12/82

**page 1 of 2**

## ANNEX TO THE EUROPEAN SEARCH REPORT
## ON EUROPEAN PATENT APPLICATION NO.

EP 23 20 6847

This annex lists the patent family members relating to the patent documents cited in the above-mentioned European search report.
The members are as contained in the European Patent Office EDP file on
The European Patent Office is in no way liable for these particulars which are merely given for the purpose of information.

17-04-2024

| Patent document cited in search report | Publication date | Patent family member(s) | | Publication date |
|---|---|---|---|---|
| | | FR | 2296369 A1 | 30-07-1976 |
| | | GB | 1503219 A | 08-03-1978 |
| | | GR | 61109 B | 12-09-1978 |
| | | GT | 197852945 A | 19-12-1979 |
| | | HK | 49278 A | 08-09-1978 |
| | | IE | 42461 B1 | 13-08-1980 |
| | | IL | 48764 A | 29-09-1978 |
| | | IN | 143995 B | 11-03-1978 |
| | | JP | S5191136 A | 10-08-1976 |
| | | KE | 2867 A | 18-08-1978 |
| | | LU | 74069 A1 | 04-07-1977 |
| | | MY | 7800388 A | 31-12-1978 |
| | | NL | 7515135 A | 06-07-1976 |
| | | NO | 138185 B | 17-04-1978 |
| | | NZ | 179594 A | 10-07-1978 |
| | | OA | 05193 A | 28-02-1981 |
| | | RO | 81046 B | 30-01-1983 |
| | | SE | 425285 B | 20-09-1982 |
| | | ZA | 757528 B | 27-07-1977 |

--------------------------------------------------------------------------------

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018006148 A1

**Non-patent literature cited in the description**

- **MOHAN et al.** UAV-Supported Forest Regeneration: Current Trends, Challenges and Implications. MDPI, 2021
- **STELZER, H.** How to plant forest tree seedlings. University of Missouri, 2019

- **AGHANI, M.** ; **MANTEUFFEL-ROSS, T.** Enhancing Direct Seeding Efforts with Unmanned Aerial Vehicle (Uav) ''Swarms'' and Seed Technology. *Tree Planters'Notes*, 2020, https://rngr.net/publications/tpn/63-2/enhancing-direct-seeding-efforts-with-unmanned-aerial-vehicle-uav-201cswarms201d-and-seed-technology